# FASCICULE DE BREVET EUROPEEN

(11) **EP 1 326 872 B1**
(45) Date de publication et mention de la délivrance du brevet: **01.03.2006**
(21) Numéro de dépôt: 01963049.0
(22) Date de dépôt: 02.08.2001
(51) Int. Cl.: C07F 17/00, C07F 7/08, C08F 2/06, C08F 4/642

(54) **LIGANDS AVEC AU MOINS UN SUBSTITUANT FLUOROSILICONE UTILISABLES POUR LA PREPARATION DE METALLOCENES**
LIGANDEN MIT WENIGSTENS EINEM FLUOROSILIZIUM-SUBSTITUENTEN ZUR HERSTELLUNG VON METALLOCENEN
LIGANDS WITH AT LEAST A FLUOROSILICONE SUBSTITUENT USEFUL FOR PREPARING METALLOCENES

(30) Priorité: 18.08.2000 FR 0010724
(43) Date de publication de la demande: 16.07.2003
(73) Titulaire: TOTAL PETROCHEMICALS FRANCE, 92091 Paris La Défense Cedex (FR)
(72) Inventeur: CHERON, Virginie, 78000 Versailles (FR); COUTURIER, Jean-Luc, F-69006 Lyon (FR); HAGEN, Hendrik, 4535 AX Terneuzen (NL); VAN KOTEN, Gerard, NL-3734 CN Den Dolder (NL); DEELMAN, Berth, Jan, NL-4102 XD Culemborg (NL)
(74) Mandataire: Leyder, Francis
(86) Numéro de dépôt international: PCT/FR2001/002525
(87) Numéro de publication internationale: WO 2002/014337

(56) Documents cités:
- EP-A- 0 530 908
- EP-A- 0 604 908
- EP-A- 0 628 565
- EP-A- 0 729 968
- WO-A-99/54367
- JANY G ET AL: "para-Fluoro benzyl substituted bis(indenyl) metallocenes as catalyst precursors in ethene polymerization" JOURNAL OF ORGANOMETALLIC CHEMISTRY,CH,ELSEVIER-SEQUOIA S.A. LAUSANNE, vol. 553, no. 1-2, 25 février 1998 (1998-02-25), pages 173-178, XP004204917 ISSN: 0022-328X

## Description

La présente invention conceme des ligands (des métaux de transition) avec au moins un substituant fluorosiliconé, un procédé pour les préparer et leur utilisation pour la réalisation de catalyseurs type métallocènes utilisables notamment pour la polymérisation des oléfines.

Veronica Herrera et al. (Inorganic Chemistry Communications, 1998, pages 197 à 199) décrivent des complexes organiques de formules : [η⁵- C₅H₄CH₂CH₂(CF₂)₉CF₃]Rh(CO)L avec L=CO ou P[CH₂CH₂(CF₂)₅CF₃]₃ et Cl₂Ni {P[CH₂CH₂(CF₂)₈CF₃]₃} obtenus à partir des ligands C₅H₄CH₂CH₂(CF₂)₉CF₃ et P[CH₂CH₂(CF₂)₅CF₃]₃.

Russell P. Hugues et al. (Organometallics 1966, 15, pages 286 à 294) ont montré qu'il était nécessaire d'avoir dans des ligands du type η⁵-C₅H₄(CH₂)ₙ(CF₂)ₘF, un groupe espaceur hydrocarboné afin d'isoler le cycle cyclopentadiényle de l'effet attracteur des chaînes perfluorées dans les ligands précédemment mentionnés.

Dans la demande internationale WO 99/54367, on décrit des systèmes catalytiques de type métallocène dans lesquels le radical cyclopentadiényle comprend toujours au moins un substituant de formule : 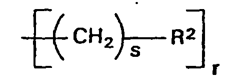
dans laquelle R² représente notamment un radical fluoroalkyle ayant un nombre d'atomes de carbone allant de 1 à 25, s est un nombre entier allant de 1 à 20, r=1,2,3,4 ou 5.
L'invention a pour objet des composés de formules générales (I) ou (II) :

[A][Si(R)₃₋ₙRfₙ]_{z} (I)

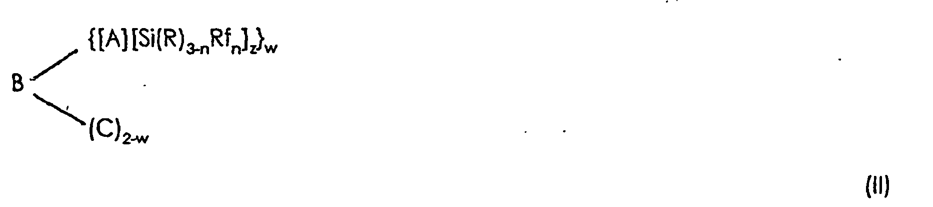

dans lesquelles :
- A représente un radical cyclopentadiényle, indényle, fluorényle.
- R représente un atome d'hydrogène, un radical alkyle, linéaire ou ramifié, ayant un nombre d'atomes de carbone allant de 1 à 40, un radical alkoxy ayant un nombre d'atomes de carbone allant de 1 à 10, un radical aryle ayant de 6 à 20 atomes de carbone, un radical aryloxy ayant de 6 à 10 atomes de carbone, un radical alcényle ayant un nombre d'atomes de carbone allant de 2 à 10;
- Rf représente un radical perfluoroalkyle CₓF₂ₓ₊₁-(CH₂)-_{y} dans lequel x représente un nombre entier allant de 1 à 20 et y=0, 1, 2 ou 3 ;
- n=1, 2 ou 3 ;
- z égal 1, 2 ou 3 ;
- B représente un groupe divalent >MR¹R² ou bien 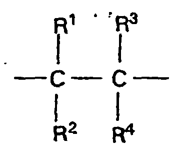
   dans lequel M représente un atome de carbone, un atome de silicium, un atome de germanium ou un atome d'étain ; R¹, R², R³ et R⁴, identiques ou différents, représente un atome d'hydrogène, un radical alkyle, linéaire ou ramifié, ayant un nombre d'atomes de carbone allant de 1 à 20, un radical aryle ayant de 6 à 14 atomes de carbone ; de préférence B représente des groupements divalents tels que : -(CH₂)₂-, -CH(CH₃)-CH₂-, -CH(C₄H₉)C(CH₃)₂-, -CH₂Si(CH₃)₂-, >Si(CH₃)₂;
- C représente un radical cyclopentadiényle, méthylcyclopentadiényle, pentaméthylcyclopentadiényle, butylcyclopentadiényle, indényle, naphtyle, fluorényle ;
   w=1 ou 2.

Parmi les composés de formules (I) et (II), on préfère ceux dans les formules desquelles A représente un radical cyclopentadiényle, R représente un CH₃-, Rf représente un radical perfluoroalkyle CₓF₂ₓ₊₁(CH₂)_{y}- dans lequel x va de 1 à 8 et y=0 ou 2.

De préférence Rf=CF₃(CF₂)₅(CH₂)₂- ou CF₃(CF₂)₇- ; n=1 ; z=1 ou 2 ; B=>Si(CH₃)₂ ; w=2.

A titre d'illustration de composés de formule (I), on citera :
- le diméthyl(1H, 1H, 2H, 2H-perfluoro-1-octyl)silylcyclopentadiène,
- le diméthyl(perfluorooctyl)silylcyclopentadiène,
- le 1,3-bis[diméthyl(perfluorooctyl)silyl]cyclopentadiène.

A titre d'illustration de composés de formule (II), on citera les composés de formule:

(CH₃)₂Si[C₅H₄Si(CH₃)₂C₈F₁₇]₂

(CH₃)₂Si[C₅H₃{Si(CH₃)₂C₈F₁₇}₂]₂

Les composés de formule (I) dans les formules desquelles y est différent de 0 peuvent être préparés selon le schéma réactionnel suivant: 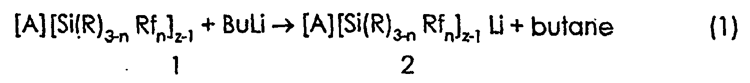 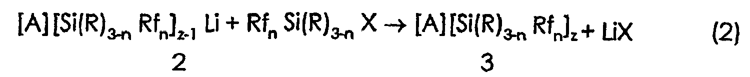
avec Rf=CₓF₂ₓ₊₁(CH₂)_{y}-;
X=Cl, Br ou I et z=1, 2 ou 3.

On effectue la réaction (1) de manière connue qui consiste à préparer le dérivé lithié 2 dans un solvant apolaire tel que l'hexane en faisant réagir 1 avec du butylithium à une température comprise entre 0°C et 20°C pendant plusieurs heures. La réaction terminée, le solvant de réaction est éliminé puis le produit obtenu est séché sous pression réduite. La réaction est réalisée sous atmosphère d'azote et en absence d'humidité.

S'agissant de la réaction (2), on opère selon des conditions non critiques qui consistent à dissoudre le dérivé lithié 2 dans un éther tel que le THF, à basse température puis on ajoute à la solution obtenue une solution éthérée de perfluorohalogènoalkylsilane 3, maintenue à une température voisine de 0°C, ledit halogènochlorosilane étant utilisé de préférence en excès molaire de 1 % à 10 % par rapport à la stoechiométrie de la réaction (2).

La réaction est ensuite poursuivie pendant plusieurs heures à température ambiante sous agitation puis on élimine les composés volatiles sous pression réduite et le produit (I) obtenu est extrait au moyen d'un solvant inerte puis distillé sous pression réduite.

De préférence, on utilise les perfluoroalkylchlorosilanes RfₙSi(R)₃₋ₙCl qui peuvent être obtenus selon une méthode décrite dans J. Fluorine Chem. 44, page 191, 1955.

Les composés de formule (I) dans les formules desquels y=0 peuvent être obtenus selon les réactions ci-après : 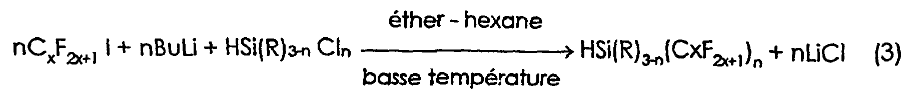 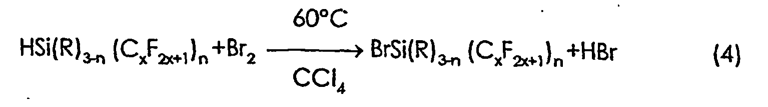 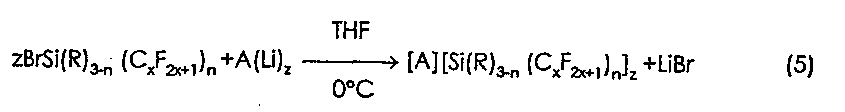
n=1, 2 ou 3; z=1, 2 ou 3.

La réaction (3) est réalisée selon un processus qui consiste à ajouter lentement une solution de BuLi dans l'hexane à un mélange constitué par CₓF₂ₓ₊₁ I et par un excès molaire de HSi(R)₃₋ₙClₙ par rapport à la quantité molaire de CₓF₂ₓ₊₁ I mise en oeuvre dans l'éther à -78°C.

Les composés de formule (II) peuvent être obtenus selon des méthodes connues qui consistent à faire réagir les composés (I) et/ou (C) lithiés en milieu solvant sur un composé dichloré BCl₂.

Un autre objet de l'invention est l'utilisation des composés de formule (I) ou (II) comme ligands des métaux du groupe (III), IV_{b}, V_{b}, VI_{b}, des lanthanides ou des actinides de la classification périodique des éléments pour la préparation de métallocènes de formules : 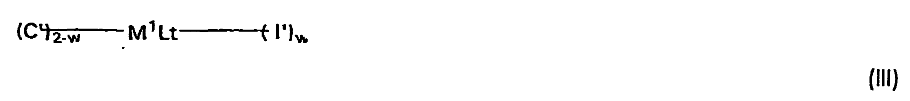 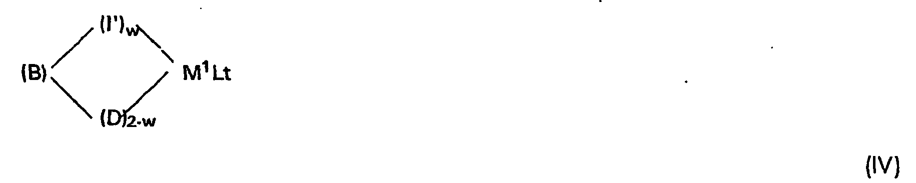
dans lesquels (B) et w ont les mêmes significations que des les formules (I) et (II) précédemment mentionnées ;
(I') représente (I) dans lequel le radical (A) a un hydrogène en moins, (C') représente (C) avec un hydrogène en moins ;
- D=(C') ou (I') ;
- M¹ représente un métal des groupes III, IVb, Vb ou Vlb ainsi qu'un métal du groupe des lanthanides ou actinides.
- L identique ou différent représente un atome d'halogène, un radical alkyle, linéaire ou ramifié ayant un nombre d'atomes de carbone allant de 1 à 20, un radical alcényle ayant de 2 à 20 atomes de carbone, un radical alkoxy ayant de 1 à 20 atomes de carbone, un radical aryloxy ou aryle ayant de 6 à 40 atomes de carbone ;
- t représente un nombre entier allant de 1 à 4 et est égal à 2 lorsque dans les formules (III) et (IV) M¹=Ti, Zr ou Hf.

De préférence, M¹ représente un métal du groupe IVb et tout particulièrement M¹ représente Zr.

Les composés de formule (III) ou (IV) peuvent être obtenus selon des méthodes connues qui consistent à introduire le dérivé lithié de (I) ou de (II) en solution dans un éther tel que le THF, goutte à goutte, à basse température dans une solution éthérée de M¹L₁ à environ 0°C puis on laisse réagir à température ambiante sous agitation pendant plusieurs heures et on isole les composés (III) ou (IV) selon des méthodes connues de l'homme du métier.

La présente invention a également pour objet un procédé pour l'obtention de polyoléfines par polymérisation d'au moins une oléfine en présence d'un catalyseur qui contient au moins un composé de formule (III) ou (IV) comme précatalyseur et au moins un cocatalyseur.

La polymérisation peut être une homopolymérisation ou une copolymérisation.

Selon la présente invention, la préférence est donnée à l'homopolymérisation ou la copolymérisation d'oléfines de formule : R^{α}-CH=CH-R^{β} dans laquelle R^{α} et R^{β}, identiques ou différents représentent un atome d'hydrogène, un atome d'halogène, un radical hydrocarboné, linéaire ou ramifié, ayant un nombre d'atomes de carbone allant de 1 à 20 et, de préférence, allant de 1 à 10, un radical phényle éventuellement substitué par un atome d'halogène, un radical alkyle linéaire ou ramifié ayant un nombre d'atomes de carbone allant de 1 à 4 ; R^{α} et R^{β} peuvent également ensemble avec les atomes les connectant former un ou plusieurs cycles.

A titre d'illustration de telles oléfines, on citera les 1-oléfines telles que l'éthylène, le propylène, le 1-butène, le 1-pentène, le 1-hexène, le 1-octène, le 4-méthyl-1-pentène ; le styrène ; les diènes tels que le 1,3-butadiène ou le 1,4-butadiène ; les oléfines cycliques telles que le norbomène, le tetracyclododécène, le norbomadiène, le vinylnorbomène.

Le procédé de polymérisation de l'invention s'adresse tout particulièrement à l'homopolymérisation de l'éthylène.

La polymérisation peut être effectuée de manière connue en phase gazeuse ou dans un milieu réactionnel liquide, on peut utiliser un solvant inerte ou l'oléfine (à polymériser) en tant que milieu réactionnel.

La polymérisation peut être une polymérisation en solution, en suspension, en émulsion, en masse, une polymérisation en phase gazeuse ou une polymérisation en milieu supercritique (CO₂). On peut l'effectuer soit en continu, soit en discontinu, à des pressions élevées allant de 50 à 300 Mpa (bar) ainsi qu'à de basses pressions allant de 0,01 à 50 Mpa. La polymérisation peut être réalisée à des températures allant de 0°C à 250°C et, de préférence allant de 50°C à 150°C.

Le catalyseur qui comprend au moins un composé de formule (III) ou (IV) de la présente invention peut être utilisé en phase homogène ou être supporté.

A titre de support utilisable selon la présente invention, on citera les gels de silice, la silice fluorée, de la poudre de polyoléfine très divisée, les oxydes inorganiques comme l'alumine, la silice.

Le catalyseur utilisé dans la présente invention comprend de préférence, comme précatalyseur, un métallocène de formule (III) ou (IV) et un cocatalyseur. Il est possible d'utiliser un mélange d'au moins 2 ou plusieurs métallocènes (III) ou (IV), lorsque notamment on désire une distribution moléculaire plus ou moins large.

Comme cocatalyseur utilisable selon la présente invention, on citera les acides de Lewis tels que BF₃, les composés organoborés tels que le tris(4-fluorophényl)borane, le tris(pentafluorophényl)borane, les composés organoaluminiques tels que les aluminoxanes représentés par les formules générales pour les composés linéaires : 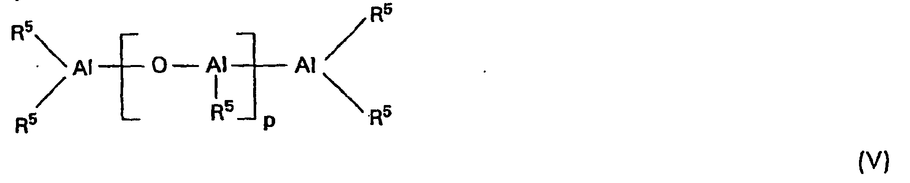
et pour les composés cycliques: 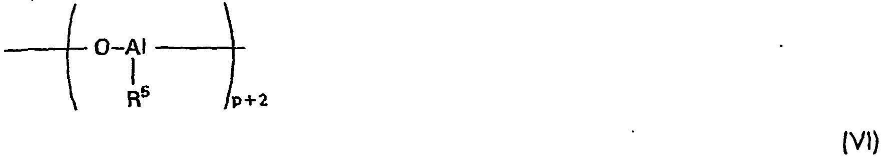
dans lesquels les radicaux R⁵, qui peuvent être identiques ou différents, représentent un atome d'hydrogène, un radical alkyle, linéaire ou ramifié, ayant un nombre d'atomes de carbone allant de 1 à 20, un radical fluoroalkyle ayant un nombre d'atomes de carbone allant de 1 à 6, un radical aryle ayant de 6 à 18 atomes de carbone, un radical fluoraryle ayant de 6 à 18 atomes de carbone, p peut être égal à 0 ou représente un nombre entier allant de 1 à 50.

Les aluminoxanes sont également disponibles dans le commerce. Ainsi, la société ALDRICH vend par exemple les méthylaluminoxanes en solution à 10 % en poids dans le toluène.

De préférence, on utilisera des aluminoxanes dans les formules desquelles les radicaux R⁵ sont identiques et représentent un méthyle, un isobutyle ou un phényle, et, tout particulièrement un méthyle.

Les proportions de métallocènes (III) ou (IV) et de cocatalyseurs constituant le catalyseur de polymérisation peuvent varier dans une large mesure. On utilisera un rapport molaire cocatatyseur /métal de transition M¹ allant de 1/1 à 10 000/1 et, de préférence, allant de 1/1 à 1 000/1.

Les métallocènes (III) ou (IV) de la présente invention peuvent être utilisés selon des concentrations basées sur le métal de transition M¹ qui vont de 10⁻³ à 10⁻⁸ mol. , de préférence, de 10⁻⁴ à 10⁻⁷ mol. de métal M¹ par litre de solvant.

L'utilisation des métallocènes (III) et/ou (IV) de la présente invention dans les procédés de polymérisation des oléfines permet de polymériser les oléfines avec une bonne productivité.

Les exemples qui suivent illustrent l'invention.

### EXEMPLES

On utilise les réactifs suivants :
- cyclopentadiène a été obtenu par craquage du dicyclopentadiène et est distillé avant utilisation ;
- chloro(diméthyl)(1H, 1H, 2H, 2H-perfluoro-1-octyl)silane a été obtenu selon un procédé décrit dans J. Fluorine Chem. 44, page 191, 1995 ;
- tous les autres réactifs sont disponibles dans le commerce et sont utilisés sans purification ;
- les solvants sont séchés et distillés avant leur utilisation. Les composés obtenus ont été caractérisés par analyse élémentaire et par RMN du ¹H, ¹³C, ²⁹Si et ¹⁹F.

Toutes les réactions sont réalisées sous atmosphère d'azote sec. Les spectres RMN ont été effectués sur un appareil VARIAN INOVA 300 ou VARIAN MERCURY 200.
La spectrométrie de masse (nano ES-Q-TOF-MS) a été réalisée sur un spectromètre de masse "MICROMASS Q-Tof hybrid tandem mass spectrometer" et "Mass Lynx software, version 3.0".

### Préparation du diméthyl(1H, 1H, 2H, 2H-perfluoro-1-octyl)silylcyclopentadiene :

A une solution de n-BuLi (30,4 mmol) dans l'hexane (100 ml) agité et maintenu à 0°C, on ajoute 2,4 ml (29,1 mmol) de cyclopentadiène fraîchement distillé. Le mélange réactionnel obtenu est agité 3 heures à température ambiante puis on élimine le solvant et le produit obtenu est lavé 3 fois avec du pentane (3 x 50 ml) et est séché sous pression réduite.
Le cyclopendiène lithium obtenu est dissout dans 100 ml de THF à -78°C et la solution est ajoutée goutte à goutte, en 30 minutes, à une solution de C₆F₁₃C₂H₄Si(CH₃)₂Cl - 13 g (29,5 mmol) dans 100 ml de THF- maintenu à 0°C.
Le milieu réactionnel est ensuite agité environ 12 heures à température ambiante. Les composés volatiles sont éliminés sous pression réduite. Le produit est extrait avec 100 ml de pentane, séché sous pression réduite, puis distillé.
On obtient 10,94 g d'un liquide orangé de point d'ébullition égal à 75-80°C sous 0,4 mm Hg (rendement : 80 % par rapport au cyclopentadiène mis en oeuvre).
RMN ¹H(CDCl₃) δ (ppm) :
6,87 et 6,71 (2 x m, CH=, 1- and 2- C₅H₅SiMe₂R_{f}), 6,63 et 6, 53 (2 x m, CH=, 5- C₅ H₅SiMe₂R_{f}), 3,40 (m, 5-CH, 5-C₅H₅SiMe₂R_{f}), 3,04 (m, 5-CH₂, 1- and 2-C₅H₅SiMe₂R_{f}), 1,98 (m, CH₂-CF₂, 1-, 2-, and 5-C₅H₅SiMe₂R_{f}), 0,88 (m, CH₂-Si, 1 and 2- C₅H₅SiMe₂R_{f}), 0,68 (m, CH₂-Si, 5-C₅H₅SiMe₂R_{f}), 0,21 (s, SiMe₂, 1- and 2-C₅H₅SiMe₂R_{f}), 0,03 (s, SiMe₂, 5-C₅H₅SiMe₂R_{f}).
La complexité du spectre RMN du proton est due à la présence des isomères 1-, 2- et 5-(1H, 1H, 2H, 2H-perfluoro-1-octyl-diméthylsilyl) cyclopentadiène, étant entendu que l'isomère 5 est majoritaire à température ambiante.
Analyse élémentaire calculée pour C₁₅H₁₅F₁₃Si : C : 38;30 ; H : 3,19 ; F52,55 ; Si 5,96. Trouvé : C : 38,08 ; H : 3,29 ; F : 52,74 ; Si : 5,81.

### Préparation du dichlorure 1,1'-bis[diméthyl(1H, 1H, 2H, 2H-perfluoro-1-octyl)silylcyclopentadiényl]zirconium :

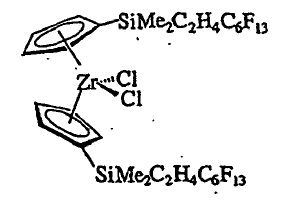

On ajoute 37 g (78,7 mmol) de C₅H₅Si(CH₃)₂C₂H₄C₆F₁₃ à une solution de n-BuLi (78,9 mmol) dans l'hexane (200 ml) agitée et maintenue à 0°C. Le mélange obtenu est agité 3 heures à température ambiante. Ensuite, le solvant est éliminé , le produit est lavé avec du pentane (3 x 50 ml) et ensuite séché sous pression réduite.
Le Li[C₅H₄Si(CH₃)₂C₂H₄C₆F₁₃] refroidi à -78°C est dissout dans 100 ml de THF prérefroidi. Une solution de 9,08 g (38,2 mmol) de ZrCl₄ dans 100 ml de THF est préparée selon une méthode décrite Journal Am. Chem. Soc. 1995, Vol. 117, page 12114-12129. On ajoute la solution de Li[C₅H₄Si(CH₃)₂C₂H₄C₆F₁₃] dans le THF goutte à goutte en 30 minutes à la solution de ZrCl₄ dans le THF refroidi à 0°C.
La solution obtenue est agitée pendant 48 heures à température ambiante. Les produits volatiles sont éliminés sous pression réduite et le résidu est extrait avec 100 ml de toluène bouillant.
On filtre à chaud l'extrait de couleur orangé puis on concentre le filtrat sous pression réduite. On obtient 31,5 g d'un produit sous forme d'aiguilles blanches (rendement : 75 % par rapport à ZrCl₄.
RMN ¹H(200, 14 MHz, CDCl₃) δ (ppm) :
6,65 et 6,52 (t, 4H, J_{AX}=J_{AX}=2,6 Hz, CH=), 1,98 (m, 2H, CH₂-CF₂), 0,96 (m, 2H, CH₂-Si), 0,37 (s, 6H, (CH₃)₂Si) ;
RMN ¹H (200,14 MHz, acetone-d₆) δ 6,81 (s, 4H, CH=), 2,17 (m, 2H, CH₂-CF₂), 1,03 (m, 2H, CH₂-Si), 0,40 (t, 6H, J=3,5 Hz, (CH₃)₂Si) ;
RMN ¹³C{H} (50,33 MHz, acétone-d₆) 127,24 (CH=), 125,36 (C=), 117,21 (CH=), 26,52 (t, ²J_{C,F}= 23,3 Hz, CH₂-CF₂), 6,77 (CH₂-Si), - 2,25 (Si(CH₃)₂) ;
RMN ¹⁹F {H} (282,35 MHz, acétone-d₆) δ-77,04 (t, J_{F,F}=9,2 Hz, CF₃), -111,52 (m, α-CF₂), -117,81 (s, γ- CF₂), -118,78 (s, δ- CF₂), -119,04 (d, J_{F,F}=12,1 Hz, CF₃), -122,08 Hz (m, β-CF₂) ;
RMN ²⁹Si (59,62 MHz, acétone-d₆) δ1,70 (SiMe₂).
Analyse élémentaire calculée pour C₃₀H₂₈Cl₂F₂₆Si₂Zr : C : 32,73 % ; H : 2,55 % ; Cl : 6,45 % ; F : 44,91 % ; Si : 5.09 %. Trouvée : C : 32,58 %; H : 2,56 % ; Cl : 6,35 % ; F : 44,78 % ; Si : 5,39 %.
Spectre de masse (ES) : Masse moléculaire calculée pour C₃₀H₂₈Cl₂F₂₆Si₂Zr : 1 100 g / mole. Trouvée : 1 123 g / mole ([M+Na]⁺).

### Préparation du diméthyl(perfluorooctyl)silylcyclopentadiène :

C₅H₅Si(CH₃)₂(C₈F₁₇)

### 1/ Préparation de HSi(CH₃)₂C₈H₁₇ selon la réaction (3)

A un mélange maintenu à -78°C contenant 26,52 g de C₈F₁₇I (48,6 mmol) et 6,8 ml de diméthylchlorosilane dans 150 ml d'éther, on ajoute, goutte à goutte en 270 minutes, 50 mmol de butyllithium dans 90 ml d'hexane.
Après avoir porté le milieu à température ambiante, une suspension blanche est obtenue. On ajoute 50 ml d'eau et 150 ml d'éther.
On décante, on sépare les deux couches et la couche éthérée est lavée avec 30 ml d'eau salée puis séchée sur MgSO₄.
On élimine le solvant à l'évaporateur rotatif ; on obtient 19,8 g d'une huile jaune que l'on soumet à une distillation sous pression réduite en utilisant une colonne de Vigreux de 10 cm.
On obtient une fraction de 10,14 g de HSi(CH₃)₂C₈F₁₇ de point d'ébullition égal à 57 - 59°C sous une pression de 11 mbar et qui contient selon la RMN du ¹⁹F environ 5 % de C₈F₁₇I (rendement : 44 %).
RMN ¹H (300,1 MHz, CDCl₃) δ(ppm) :
0,38 (d, 6H, ³J_{H, H}= 4 Hz, Si(CH₃)₂), 4,24 (large, 1H, HSi).
RMN ¹³C {¹⁹F} (75,5,1 MHz, CDCl₃) δ(ppm) :
-7,9 (q, 1J_{H, C}= 125 Hz, Si(CH₃)₂), 108,6, 110,5, 111 (s, 2C) 117,7 ; 117,4 (t, 2J_{F, C} = 19 Hz, CF₃), 122,7 (CF₂Si).
RMN ¹⁹F (282,4 MHz, CDCl₃) δ(ppm) :
-81,9 (t, 3F, ⁴J_{F,F}= 9 Hz, CF₃), -120,8 (large s, 2F), -122,6 (large s, 2F), -122,8 (large s, 4F), -123,6 (large s, 2F), -127,1 (large s, 2F), -127,6 (d, 2F, 3J_{H,F} = 12 Hz, CF₂Si. RMN ²⁹Si {¹H}(59,6 MHz, CDCl₃) δ(ppm) :
-8,3 (tt, 1 J_{H, C}= 125 Hz, Si(CH₃)₂), 108,6 , 110,5, 111 (s. 2C) 117,7 ; 117,4 (t, ²J_{F, Si} = 30 Hz, CF₃), ³J_{F, Si} = 6 Hz.

### 2/ Préparation de BrSi(CH₃)₂C₈F₁₇ selon la réaction (4) :

On agite pendant 18 heures à 60°C un mélange constitué par 7,65 de HSi(CH₃)₂C₈F₁₇ (15,8 mmol) et 62 mmol de brome dans 25 ml de CCl₄. Après élimination des composés volatiles sous pression réduite, on obtient un liquide qui est soumis à une distillation flash. On obtient 8,35 g de BrSi(CH₃)₂ C₈F₁₇ (rendement 95 % qui se présente sous forme d'un liquide rose pâle). RMN ¹H (300,1 MHz, CDCl₃) δ(ppm) : 0,84 (s) ; RMN ¹³C{¹⁹F} (75,5 MHz, CDCl₃) δ (ppm) : -0,1 (q, ¹J_{H,C} = 124 Hz, SiMe₂), 108,6 (partiellement résolu q, J_{H,C} = 12 Hz), 110,4; 111,0 (s, 2C), 111,6 ; 113,0 ; 117,4 (t, ²J_{F,C} = 21 Hz, CF₃), 119,3 (CF₂Si). RMN ¹⁹F (282,4 MHz, CDCl₃) δ(ppm) : 82,0 (t, 3F, ⁴J_{F,F} = 9 Hz CF3), -118,8 (large s, 2F, CF₂Si) -122,5 (large s, 2F), -122,9 (large s, 4F), -123,7 (large s, 2F), -127,2 (m, 4F).
RMN ²⁹Si {1H} (59,6 MHz, CDCl₃) δ (ppm) : 17,7 (t, ²J_{F,Si} = 35 Hz).

### 3/ Préparation de C₅H₅Si(CH₃)₂C₈F₁₇ selon la réaction (5) :

On ajoute, goutte à goutte, une solution de 0,93 g de cyclopentadiène lithium (12,9 mmol) dans 50 ml de THF à une solution agitée de 7,32 g de BrSi(CH₃)₂C₈F₁₇ (13,1 mmol) dans 50 ml de THF à 0°C. La solution brune obtenue est agitée 1 heure après la fin de l'addition. La réaction est rapidement stoppée par addition de 200 ml d'eau.

On extrait avec 200 ml de pentane, la phase organique est lavée avec de l'eau - 2 fois avec 50 ml - puis avec 30 ml d'eau salée. Après séchage avec du sulfate de magnésium, les composés volatiles sont éliminés au moyen d'un évaporateur rotatif. Le liquide obtenu est soumis à une distillation flash, on obtient 5 g de C₅H₅Si(CH₃)₂ (C₈F₁₇) (rendement : 70 %) qui se présente sous forme d'un liquide jaune clair.
RMN ¹H (300,1 MHz, CDCl₃) δ (ppm) ; 0.13 (s, 6H, SiMe₂), 0,51 (s, 1,5H, SiMe₂), 3,18 (d, 0,4H, J=1,5 Hz, C₅H₅), 6,4 - 7,2 (m, 4,4H, C₅H₅).
RMN ¹³C{¹⁹F} (75,5 MHz, CDCl₃) δ (ppm) : -7,6 (q, ¹J_{H,C} = 121 Hz, SiMe₂), -5,6 (q, ¹J_{H,C} = 123 Hz, SiMe₂), 108,7 (partiellement résolu q, J_{F,C} = 12 Hz), 110,5 ; 111.1 (partiellement résolu, 2C), 111,8 ; 113,3 ; 117,4 (t, ²J_{F,C} = 16 Hz, CF₃), 123,2 ; 131,7 (massif), 133,9 (massif).
RMN ¹⁹F (282,4 MHz, CDCl₃) δ (ppm) ; 81,9 (t, 3F, ⁴J_{F,F} = 10 Hz, CF₃), -119,2 (large s, 2F, CF₂Si), -122,5 (large s, 2F), -122,7 (large s, 4F), -123,6 (large s, 2F), -126,8 (t, 1,5F, ⁴J_{F-F} = 15 Hz, CF₂Si), -127,1 (m, 2F), -127,3 (t, 0,5F, ⁴J_{F-F} = 15 Hz, CF₂Si).

### Préparation du dichlorure 1,1'-bis[diméthyl(perfluorooctyl)silyl-cyclopentadiényl]zirconium : ZrCl₂{CH₅H₄Si(CH₃)₂C₈F₁₇}₂ :

Dans une première étape, on prépare le dérivé lithié du (perfluorooctyldiméthylsilyl)cyclopentadiène en ajoutant, goutte à goutte, 3,6 ml de n-BuLi (5,7 mmol) dans l'hexane à une solution constituée par 2,77 g de C₅H₅Si(CH₃)₂C₈F₁₇ dans 50 ml d'hexane.
Un précipité se forme lentement. On agite le milieu réactionnel pendant 12 heures. Le précipité est isolé par centrifugation /décantation puis est lavé deux fois avec du pentane (40 ml puis 25 ml). On sèche sous pression réduite.
On obtient 2,09 g (rendement 75 %) de Li[C₅H₄Si(CH₃)₂C₈F₁₇] qui se présente sous forme d'un solide blanc.
Dans une seconde étape, on prépare le métallocène. 1,26 g de Li[C₅H₄Si(CH₃)₂ C₈F₁₇] (2,3 mmol) est refroidi à -78°C puis est mis en suspension à -78°C dans 40 ml de THF.
Le mélange obtenu, de couleur bleu, est ajouté à -78°C à une solution de 0,44 g de ZrCl₄(THF)₂ (1,2 mmol) dans 40 ml de THF.
Après agitation pendant 20 minutes à -78°C, la solution est réchauffée à température ambiante et on obtient une solution rouge vineux. La solution est agitée pendant 16 heures, temps durant lequel la coloration de la solution passe à l'orange sombre.
Le THF est éliminé sous pression réduite et le résidu est extrait deux fois avec du benzène (40 ml puis 20 ml).
Après élimination du solvant sous pression réduite, on obtient 1,05 g d'un produit visqueux de couleur brune. Ce produit est recristallisé 2 fois dans du toluène chaud. On obtient 0,2 g (rendement 13 %) de métallocèné de formule ZrCl₂{C₅H₄Si(CH₃)₂C₈F₁₇}₂ qui se présente sous la forme d'aiguilles jaune pâle.

### Utilisation du dichlorure 1,1'-bis[(diméthyl 1H, 1H, 2H, 2H-perfluoro-1-octyl)silylcyclopentadienyl]zirconium ci-après désigné par CA1 et du composé de formule ZrCl₂{C₅H₄Si(CH₃)₂C₈F₁₇}₂ ci-après CA2 pour la polymérisation de l'éthylène :

### Mode opératoire :

Un réacteur d'un litre est séché pendant 1 heure dans une étuve à 80°C sous pression réduite. Ensuite, le réacteur est raccordé à une ligne de polymérisation, puis mis successivement sous azote et sous pression réduite à 130°C jusqu'à ce que la pression atteigne 4.10⁻² mbar. On introduit dans le réacteur 200 ml de toluène puis, de l'éthylène est introduit sous 5 bar lorsque l'on utilise ie précatalyseur CA1 et sous 6 bar lorsque l'on utilise le précatalyseur CA2. La température dans le réacteur est ensuite stabilisée à 80°C. Dans une boîte à gants, on pèse dans une premier flacon 10 pmol de précatalyseur CA1 ou CA2 et la solution toluénique de méthylaluminoxane (MAO) est pesée dans un second flacon et ces deux flacons sont fermés avec un septum. Sur la ligne de polymérisation, le toluène (25 ml) est ajouté sous azote au flacon contenant le MAO et la solution est injectée dans le réacteur. Ensuite, on procède de la même façon avec le flacon contenant le précatalyseur. La polymérisation dure 30 minutes et est ensuite stoppée avec un mélange HCl 2N /éthanol. Le polymère obtenu est lavé 2 fois avec de l'acétone et séché 24 heures à 80°C dans une étuve, sous pression réduite.

Les résultats sont reportés dans le tableau 1. Les masses moléculaires Mw et Mn sont des valeurs moyennes basées sur au moins deux mesures GPC par échantillon de polyéthylène.

### Résultats :

**TABLEAU 1**

| Essai | Précatalyseur | [Zr] (µmol/l) | Rapport molaire Al / Zr | Activité (kgPE.mol⁻¹[Zr].h.bar⁻¹) | Mw (g.mol⁻¹) | Mn (g.mol⁻¹) | Ip (Mw/Mn) |
|---|---|---|---|---|---|---|---|
| 1 | CA 1 | 36 | 545 | 2000 | 88000 | 31 000 | 2,8 |
| 2 | CA 2 | 40 | 500 | 1 900 | 96000 | 17 000 | 5,8 |

## Revendications

1. Composés de formules générales (I) ou (II) :
[A][Si(R)₃₋ₙ Rfₙ]_{z} (I) 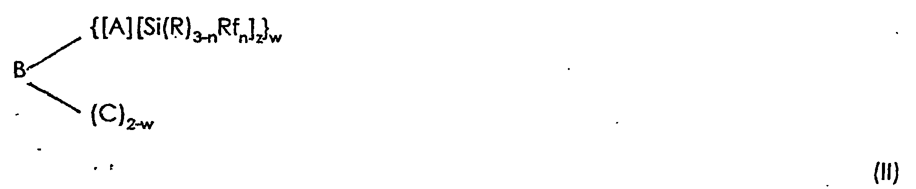
dans lesquelles :
- A représente un radical cyclopentadiényle, indényle, fluorényle ;
- R représente un atome d'hydrogène, un radical alkyle, linéaire ou ramifié, ayant un nombre d'atomes de carbone allant de 1 à 40, un radical alkoxy ayant un nombre d'atomes de carbone allant de 1 à 10, un radical aryle ayant de 6 à 20 atomes de carbone, un radical aryloxy ayant de 6 à 10 atomes de carbone, un radical alcényle ayant un nombre d'atomes de carbone allant de 2 à 10 ;
- Rf représente un radical perfluoroalkyle CₓF₂ₓ₊₁(CH₂)-_{y} dans lequel x représente un nombre entier allant de 1 à 20 et y=0, 1, 2 ou 3 ;
- n=1, 2 ou 3 ;
- z = 1, 2 ou 3 ;
- B représente un groupe divalent >MR¹R² ou bien 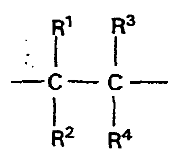
dans lequel M représente un atome de carbone, un atome de silicium, un atome de germanium ou un atome d'étain ; R¹, R², R³ et R⁴, identiques ou différents, représente un atome d'hydrogène, un radical alkyle, linéaire ou ramifié, ayant un nombre d'atomes de carbone allant de 1 à 20, un radical aryle ayant de 6 à 14 atomes de carbone ;
- C représente un radical cyclopentadiényle, méthylcyclopentadiényle, pentaméthylcyclopentadiényle, butylcyclopentadiényle, indényle, naphtyle, fluorényle ;
- w=1 ou 2.

2. Composés selon la revendication 1 dans les formules desquelles A représente un radical cyclopentadiényle, R représente un radical méthyle, Rf représente un radical perfluoroalkyle CₓF₂ₓ₊₁(CH₂)_{y} dans lequel x=6 ou 8, y=0 ou 2, B=>Si(CH₃)₂ et w=2.

3. Le diméthyl(1H, 1H, 2H, 2H-perfluoro-1-octyl)silylcyclopentadiène.

4. Le diméthyl(perfluorooctylsilyl)cyclopentadiène.

5. Le 1,3-bis[diméthyl(perfluorooctyl)silylcyclopentadiène.

6. Le composé de formule (CH₃)₂Si[C₅H₄Si(CH₃)₂C₈F₁₇]₂

7. Le composé de formule (CH₃)₂Si[C₅H₃{Si(CH₃)₂C₈F₁₇}₂]₂

8. Procédé de préparation des composés de formule (I) dans les formules desquelles y est différent de zéro, **caractérisé en ce qu'**il consiste à préparer un dérivé lithié dans un solvant apolaire à une température comprise entre 0°C et 20°C puis à faire réagir ledit dérivé lithié dissout dans un éther à basse température avec un perfluorohalogènosilane en solution étherée.

9. Procédé de préparation des composés de formule (I) dans les formules desquelles y=0, **caractérisé en ce qu'**il comprend les étapes consistant à :
a) préparer un composé de formule HSi(R)₃₋ₙ (CₓF₂ₓ₊₁)ₙ à partir de CₓF₂ₓ₊₁I, BuLi et HSi(R)₃₋ₙClₙ à basse température en milieu solvant ;
b) à bromer ledit silane HSi(R)₃₋ₙ (CₓF₂ₓ₊₁)ₙ à une température voisine de 60°C dans CCl₄, puis,
c) à faire réagir le composé bromé obtenu BrSi(R)₃₋ₙ (CₓF₂ₓ₊₁)ₙ sur un dérivé lithié de A.

10. Métallocènes de formules (III) ou (IV) : 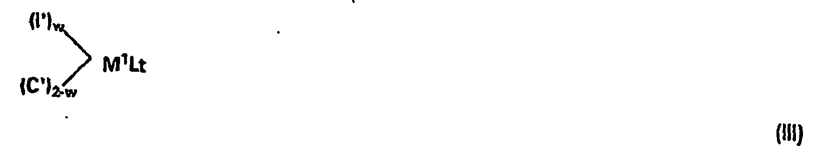 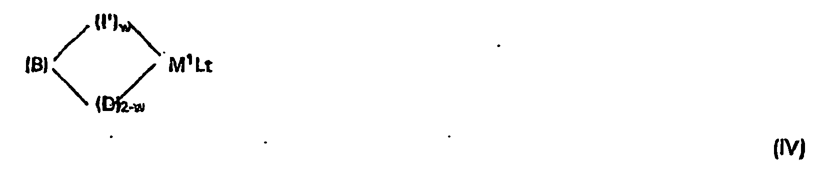
dans lesquelles :
- B représente un groupe divalent >MR¹R² ou bien 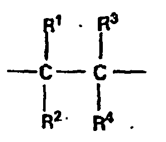
dans lequel M représente un atome de carbone, un atome de silicium, un atome de germanium ou un atome d'étain ; R¹, R², R³ et R⁴, identiques ou différents, représentent un atome d'hydrogène, un radical alkyle, linéaire ou ramifié, ayant un nombre d'atomes de carbone allant de 1 à 20, un radical aryle ayant de 6 à 14 atomes de carbone.
- (I') représente [A'](Si(R)₃₋ₙ Rfₙ]_{z}
dans lequel [A'] représente un radical cyclopentadiènyle, indényle, fluorényle ayant un hydrogène en moins.
R représente un atome d'hydrogène, un radical alkyle, linéaire ou ramifié, ayant un nombre d'atomes de carbone allant de 1 à 40, un radical alkoxy ayant un nombre d'atomes de carbone allant de 1 à 10, un radical aryle ayant de 6 à 20 atomes de carbone, un radical aryloxy ayant de 6 à 10 atomes de carbone, un radical alcényle ayant un nombre d'atomes de carbone allant de 2 à 10;
Rf représente un radical perfluoroalkyle CₓF₂ₓ₊₁(CH₂)-_{y} dans lequel x représente un nombre entier allant de 1 à 20 et y=0, 1, 2 ou 3 ;
n=1, 2 ou 3 ;
z = 1, 2 ou 3;
- (C') représente un radical cyclopentadiényle, méthylcyclopentadiényle, pentaméthylcyclopentadiényle, butyeyclopentadiényle, indényle, naphtyle avec un hydrogène en moins,
- D = (I') ou (C')
- M¹ représente un métal des groupes III, IVb, Vb ou VIb ainsi qu'un métal du groupe des lanthanides ou actinides ;
- L identique ou différent représente un atome d'halogène, un radical alkyle, linéaire ou ramifié ayant un nombre d'atomes de carbone allant de 1 à 20, un radical alcényle ayant de 2 à 20 atomes de carbone, un radical alkoxy ayant de 1 à 20 atomes de carbone, un radical aryloxy
ou aryle ayant de 6 à 40 atomes de carbone ;
- t représente un nombre entier allant de 1 à 4 et est égal à 2 lorsque dans les formules (III) et (IV) M¹=Ti, Zr ou Hf,
- w = 1 ou 2.

11. Métallocènes de formules (III) ou (IV) dans lesquelles :
M¹ = Zr,
L = Cl,
t = 2,
(I') = (CH₃)₂Si[C₅H₄Si(CH₃)₂(CH₂)₂(CF₂)₅CH₃] ou (CH₃)₂Si[C₅H₄Si(CH₃)₂C₈F₁₇] ;
w = 2;
B = (CH₃)₂Si<

12. Procédé pour l'obtention de polyoléfines par polymérisation d'au moins une oléfine en présence d'un catalyseur comprenant un composé de formule (III) ou (IV) choisi parmi rune quelconque des revendications 10 et 11 et au moins un cocatalyseur.

13. Procédé selon la revendication 12, **caractérisé en ce que** le cocatalyseur est un aluminoxane.

14. Procédé selon la revendication 13, **caractérisé en ce que** l'aluminoxane est le méthylaluminoxane (MAO).

15. Procédé selon la revendication 12, **caractérisé en ce que** l'oléfine a pour formule R^{α}-CH=CH-R^{β} dans laquelle R^{α} et R^{β}, identiques ou différents représentent un atome d'hydrogène, un atome d'hatogène, un radical hydrocarboné, linéaire ou ramifié, ayant un nombre d'atomes de carbone allant de 1 à 20 et, de préférence, allant de 1 à 10, un radical phényle éventuellement substitué par un atome d'halogène, un radical alkyle linéaire ou ramifié ayant un nombre d'atomes de carbone allant de 1 à 4.

16. Procédé selon la revendication 15, **caractérisé en ce que** l'oléfine R^{α}-CH=CH-R^{β} est l'éthylène.

## Patentansprüche

1. Verbindungen mit den allgemeinen Formeln (I) oder (II) :
[A][Si(R)₃₋ₙ Rfₙ]_{z} (I) 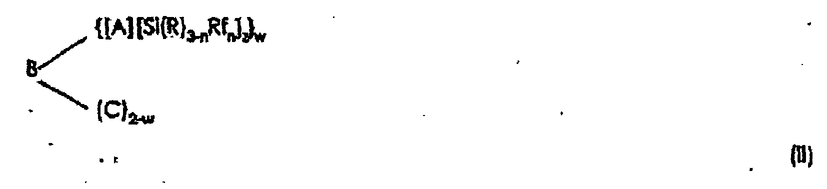
wobei
- A ein Zyklopentadienyl-, Indenyl-, Fluorenylradikal darstellt;
- R ein Wasserstoffatom, ein lineares oder verzweigtes Alkylradikal mit einer Anzahl von Kohlenstoffatomen von 1 bis 40, ein Alkoxyradikal mit einer Anzahl von Kohlenstoffatomen von 1 bis 10, ein Arylradikal mit 6 bis 20 Kohlenstoffatomen, ein Aryloxyradikal mit 6 bis 10 Kohlenstoffatomen, ein Alcenylradikal mit einer Anzahl von Kohlenstoffatomen von 2 bis 10 darstellt;
- Rf ein Perfluoralkylradikal CₓF₂ₓ₊₁(CH₂)-_{y} darstellt, bei dem x eine ganze Zahl von 1 bis 20 darstellt und Y = 0, 1, 2 oder 3;
- n = 1, 2 oder 3;
- z = 1, 2 oder 3;
- B eine divalente Gruppe > MR¹R² oder auch 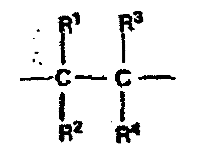
darstellt, wobei M ein Kohlenstoffatom, ein Siliziumatom, ein Germaniumatom oder ein Zinnatom darstellt; R¹, R², R³ und R⁴ identisch oder unterschiedlich sind und ein Wasserstoffatom, ein lineares oder verzweigtes Alkylradikal mit einer Anzahl von Kohlenstoffatomen von 1 bis 20, ein Arylradikal mit 6 bis 14 Kohlenstoffatomen darstellen;
C ein Zyklopentadienyl-, Methylzyklopentadienyl-, Pentamethylzyklopentadienyl-, Butylzyklopenta-dienyl-, Indenyl-, Naphtyl-, Fluorenyl-Radikal darstellt;
w = 1 oder 2.

2. Verbindungen nach Anspruch 1, in deren Formeln A ein Zyklopentadienylradikal, R ein Methylradikal, Rf ein Perfluoralkyl CₓF₂ₓ₊₁(CH₂)_{y} darstellt, wobei x = 6 oder 8, y = 0 oder 2, B=>Si(CH₃)₂ und w = 2.

3. Dimethyl(1H,1H,2H,2H-perfluor-1-oktyl)silylzyklopentadien.

4. Dimethyl(perfluoroktylsilyl)zyklopentadien.

5. 1,3-bis[dimethyl(perfluoroktylsilyl)zyklopentadien.

6. Verbindung mit der Formel (CH₃)₂Si[C₅H₄Si(CH₃)₂C₈F₁₇]₂

7. Verbindung mit der Formel (CH₃)₂Si[C₅H₃{Si(CH₃)₂C₈F₁₇}₂]₂

8. Verfahren zur Gewinnung der Verbindungen mit der Formel (I), in deren Formeln y ungleich Null ist, **dadurch gekennzeichnet, dass** es darin besteht, ein Lithiumderivat in einem apolaren Lösungsmittel bei einer Temperatur zwischen 0 °C und 20 °C herzustellen, dann dieses bei niedriger Temperatur in einem Ether gelöste Lithiumderivat mit einem Perfluorhalogensilan in Etherlösung zur Reaktion zu bringen.

9. Verfahren zur Herstellung der Verbindungen mit der Formel (I), in deren Formeln y = 0, **dadurch gekennzeichnet, dass** es die folgenden Schritte umfasst, darin bestehend:
a) eine Verbindung mit der Formel HSi(R)₃₋ₙ (CₓF₂ₓ₊₁)ₙ aus CₓF₂ₓ₊₁I, BuLi und HSi(R)₃₋ₙClₙ bei niedriger Temperatur in einem Lösungsmedium herzustellen;
b) das Silan HSi(R)₃₋ₙ(CₓF₂ₓ₊₁)ₙ bei einer Temperatur nahe 60 °C in CCl₄ zu bromieren, dann
c) die erhaltene bromierte Verbindung BrSi[R]₃₋ₙ (CₓF₂ₓ₊₁)ₙ
auf einem Lithiumderivat A zur Reaktion zu bringen.

10. Metallozene mit den Formeln (III) oder (IV): 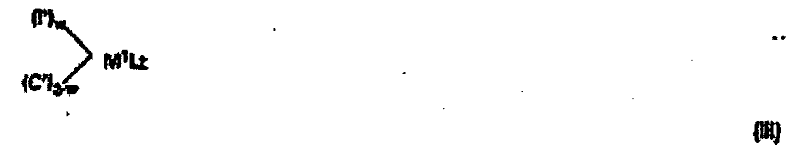 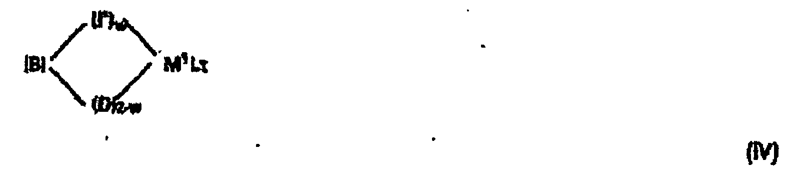
wobei :
- B eine divalente Gruppe > MR¹R² oder auch 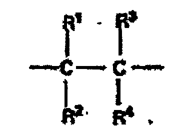
darstellt, wobei M ein Kohlenstoffatom, ein Siliziumatom, ein Germaniumatom oder ein Zinnatom darstellt; R¹, R², R³ und R⁴ identisch oder unterschiedlich sind und ein Wasserstoffatom, ein lineares oder verzweigtes Alkylradikal mit einer Anzahl von Kohlenstoffatomen von 1 bis 20, ein Arylradikal mit 6 bis 14 Kohlenstoffatomen darstellen;
- (I') [A'][Si[R]₃₋ₙ Rfₙ]_{z} darstellt,
[A'] ein Zyklopentadienyl-, Indenyl-, Fluorenyl-Radikal mit einem Wasserstoff weniger darstellt;
R ein Wasserstoffatom, ein lineares oder verzweigtes Alkylradikal mit einer Anzahl von Kohlenstoffatomen von 1 bis 40, ein Alkoxyradikal mit einer Anzahl von Kohlenstoffatomen von 1 bis 10, ein Arylradikal mit 6 bis 20 Kohlenstoffatomen, ein Aryloxyradikal mit 6 bis 10 Kohlenstoffatomen, ein Alcenylradikal mit einer Anzahl von Kohlenstoffatomen von 2 bis 10 darstellt;
Rf ein Perfluoralkylradikal CₓF₂ₓ₊₁(CH₂)-_{y} darstellt, bei dem x eine ganze Zahl von 1 bis 20 darstellt und Y = 0, 1, 2 oder 3;
n = 1, 2 oder 3;
z = 1, 2 oder 3;
- (C') ein Zyklopentadienyl-, Methylzyklopentadienyl-, Pentamethylzyklopentadienyl-, Butylzyklopenta-dienyl-, Indenyl-, Naphtyl-Radikal mit einem Kohlenstoff weniger darstellt;
- D = (I') oder (C');
- M¹ ein Metall der Gruppen III, IVb, Vb oder VIb sowie ein Metall der Gruppe der Lanthanide oder Actinide darstellt;
- L identisch oder unterschiedlich ist und ein Halogenatom, ein lineares oder verzweigtes Alkylradikal mit einer Anzahl von Kohlenstoffatomen von 1 bis 20, ein Alcenylradikal mit 1 bis 20 Kohlenstoffatomen, ein Alkoxyradikal mit 1 bis 20 Kohlenstoffatomen, ein Aryloxyradikal oder Arylradikal mit 6 bis 40 Kohlenstoffatomen darstellt;
- T eine ganze Zahl von 1 bis 4 darstellt und gleich 4 ist, wenn in den Formeln (III) und (IV) M¹ = Ti, Zr oder Hf,
- w = 1 oder 2.

11. Metallozene mit den Formel (III) oder (IV), in denen:
M¹ = Ir,
L = Cl,
t = 2,
(I') = (CH₃)₂Si[C₅H₄Si(CH₃)₂(CH₂)₂(CF₂)₅CH₃]
oder
(CH₃)₂Si[C₅H₄Si(CH₃)₂C₈F₁₇];
w = 2;
8 = (CH₃)₂Si <

12. Verfahren zur Gewinnung von Polyolefinen durch Polymerisation von mindestens einem Olefin im Beisein eines Katalysators, umfassend eine Verbindung mit der Formel (III) oder (IV), die unter einem der Ansprüche 10 und 11 ausgewählt wird, und einen Cokatalysator.

13. Verfahren nach Anspruch 12, **dadurch gekennzeichnet, dass** der Cokatalysator Aluminoxan ist.

14. Verfahren nach Anspruch 13, **dadurch gekennzeichnet, dass** das Aluminoxan das Metyhlaluminoxan (MAO) ist.

15. Verfahren nach Anspruch 12, **dadurch gekennzeichnet, dass** das Olefin als Formel R^{α}-CH=CH-R^{β} hat, wobei R^{α} und R^{β} identisch oder unterschiedlich sind und ein Wasserstoffatom, ein Halogenatom, ein lineares oder verzweigtes Kohlenwasserstoffradikal mit einer Anzahl von Kohlenstoffatomen von 1 bis 20 und vorzugsweise von 1 bis 10, ein Phenylradikal, das eventuell durch ein Halogenatom substituiert ist, ein lineares oder verzweigtes Alkylradikal mit einer Anzahl von Kohlenstoffatomen von 1 bis 4 darstellen.

16. Verfahren nach Anspruch 15, **dadurch gekennzeichnet, dass** das Olefin R^{α}-CH=CH-R^{β} Ethylen ist.

## Claims

1. Compounds of general formula (I) or (II):
[A][Si(R)₃₋ₙ Rfₙ]_{z}| (I) 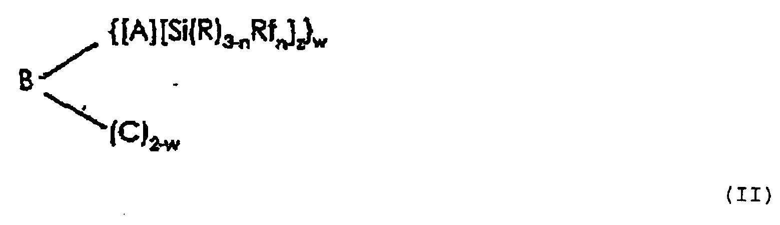
in which:
- A represents a cyclopentadienyl, indenyl, or fluorenyl radical.
- R represents a hydrogen atom, a linear or branched alkyl radical, having 1 to 40 carbon atoms, an alkoxy radical having 1 to 10 carbon atoms, an aryl radical having 6 to 20 carbon atoms, an aryloxy radical having 6 to 10 carbon atoms, or an alkenyl radical having 2 to 10 carbon atoms;
- Rf represents a perfluoroalkyl radical CₓF₂ₓ₊₁₋(CH₂)_{y}- in which x represents a whole number from 1 to 20 and y=0, 1, 2, or 3;
- n = 1, 2 or 3;
- z = 1, 2 or 3;
- B represents a divalent group >MR¹R² or 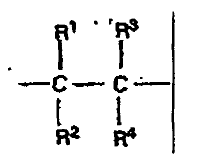
in which M represents a carbon atom a silicon atom, a germanium atom or a tin atom; R¹, R², R³ and R⁴ identical or different, represents a hydrogen, a linear or branched alkyl radical having 1 to 20 carbon atoms, or an aryl radical having 6 to 14 carbon atoms;
- C represents a cyclopentadienyl, methylcyclopentadienyl, pentamethylcyclopentadienyl, butylcyclopentadienyl, indenyl, naphthyl, or fluorenyl radical;
- w = 1 or 2.

2. The compounds according to claim 1 in the formulas wherein A represents a cyclopentadienyl radical, R represents a methyl radical, Rf represents a perfluoroalkyl radical CₓF₂ₓ₊₁(CH₂)_{y}, in which x=6 or 8. y=0 or 2, B=>Si(CH₃)₂ and w = 2.

3. The dimethyl (1H, 1H, 2H, 2H-perfluoro-1-octyl)silylcyclolpentadiene.

4. The dimethyl(perfluoroctylsilyl)cyclopentadiene.

5. The 1,3-bis[dimethyl(perfluorooctyl)silylcyclopentadiene.

6. The compound of formula (CH₃)₂Si[C₅H₄Si(CH₃)₂C₈F₁₇]₂

7. The compound of formula (CH₃)₂Si[C₅H₃{Si(CH₃)₂C₈F₁₇}₂]₂

8. Method of preparation compounds of formula (I) in the formulas wherein y is different from zero, **characterized in that** it comprises preparing a lithiated derivative in a non-polar solvent at a temperature between 0 °C and 20 °C then reacting the said lithium derivative, dissolved in an ether at low temperature, with a perfluorohalogenosilane in an ethereal solution.

9. Method of preparation of compounds of formula (I) in the formulas in which y=0, **characterized in that** it includes the stages comprising:
a) preparing a compound of formula HSi(R)₃₋ₙ(CₓF₂ₓ₊₁)ₙ from CₓF₂ₓ₊₁, BuLi and HSi(R)₃₋ₙClₙ at low temperature in a solvent medium;
b) brominating the said silane HSi(R)₃₋ₙ(CₓF₂ₓ₊₁)ₙ at a temperature in the neighborhood of 60 °C in CCl₄, then,
c) reacting the resulting brominated compound
BrSi(R)₃₋ₙ(CₓF₂ₓ₊₁)ₙ with a lithiated derivative of A.

10. Metallocenes of formulas (III) or (IV): 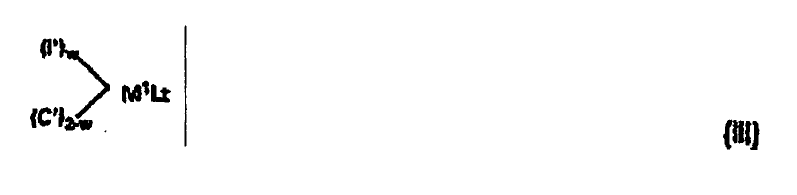 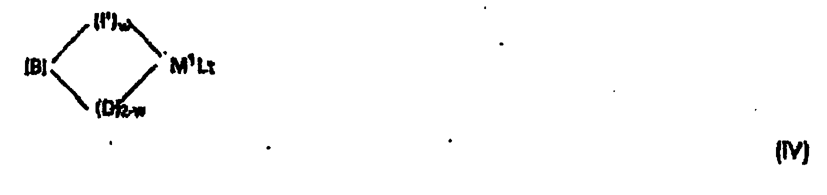
in which:
- B represents a divalent group >MR¹R² or alternatively 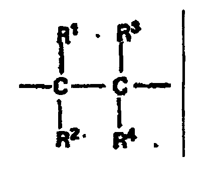
in which M represents a carbon atom, a silicon atom, a germanium atom or a tin atom:R¹, R², R³ and R⁴, identical or different, represent a hydrogen atom, a linear or branched alkyl radical, having 1 to 20 carbon atoms, or an aryl radical having 6 to 14 carbon atoms.
- (1') represents [A'][Si(R)₃₋ₙ]ₓ
wherein {A'} represents a cyclopentadienyl, indenyl or fluorenyl radical having one less hydrogen.
R represents a hydrogen atom, a linear or branched alkyl radical having 1 to 40 carbon atoms, an alkoxy radical having 1 to 10 carbon atoms, an aryl radical having 6 to 20 carbon atoms, an aryloxy radical having 6 to 10 carbon atoms, or an alkenyl radical having 2 to 10 carbon atoms;
Rf represents a perfluoroalkyl radical CₓF₂ₓ₊₁(CH₂)_{y}- in which x represents a whole number from 1 to 20, and y=0, 1, 2 or 3;
n=1, 2 or 3;
z=1, 2 or 3
(C') represents a cyclopentadienyl, methylcyclopentasdienyl, pentamethylcyclopentadienyl, butylcyclopentadienyl, indenyl, or naphthyl radical with one less hydrogen.
- D = (I') or (C')
- M¹ represents a metal of Groups III, IVb, Vb or VIb as well as a metal from the lanthanide or actinide groups;
- L identical or different represents a halogen atom, a linear or branched alkyl radical having 1 to 20 carbon atoms, an alkenyl radical having 2 to 20 carbon atoms, an alkoxy radical having 1 to 20 carbon atoms, or an aryloxy or aryl radical having 6 to 40 carbon atoms;
- t represents a whole number from 1 to 4 and is equal to 2 when in formulas (III) and (IV) M¹ = Ti, Zr or Hf;
- w=1 or 2

11. Metallocenes of formulas (III) or (IV) in which:
M¹=Zr,
L=Cl,
t=2.
(I') = (CH₃)₂Si[C₅H₄Si(CH₃)₂(CH₂)₂(CF₂)₅CH₃] or (CH₃)₂Si[C₅H₄Si(CH₃)₂C₈F₁₇] ;
w=2;
B= (CH₃)₂Si<

12. A method for obtaining polyolefins by polymerization of at least one olefin in the presence of a catalyst comprising a compound of formula (III) or (IV) chosen from among one or other of claims 10 and 11 and at least one cocatalyst.

13. The method according to claim 12, **characterized in that** the cocatalyst is an aluminoxane.

14. The method according to claim 13, **characterized in that** the aluminoxane is the methylaluminoxane (MAO).

15. The method according to claim 12, **characterized in that** the olefin has the formula R^{α}-CH=CH-R^{β} in which R^{α} and R^{β}, identical or different represent a hydrogen atom, a halogen atom, a linear or branched hydrocarbon radical, having 1 to 20 carbon atoms, preferably from 1 to 10, a phenyl radical which depending on circumstances is substituted by a halogen atom, or a linear or branched alkyl radical having 1 to 4 carbon atoms.

16. The method according to claim 15, **characterized in that** the olefin R^{α}-CH=CH-R^{β} is ethylene.
